# EUROPEAN PATENT SPECIFICATION

(11) **EP 4 204 943 B1**
(45) Date of publication and mention of the grant of the patent: **04.03.2026**
(21) Application number: 21769822.4
(22) Date of filing: 25.08.2021
(51) Int. Cl.: G06F 3/12

(54) **INFORMATION PROCESSING APPARATUS, PROGRAM, AND INFORMATION PROCESSING SYSTEM**
INFORMATIONSVERARBEITUNGSVORRICHTUNG, PROGRAMM UND INFORMATIONSVERARBEITUNGSSYSTEM
APPAREIL DE TRAITEMENT D'INFORMATIONS, PROGRAMME ET SYSTÈME DE TRAITEMENT D'INFORMATIONS

(30) Priority: 27.08.2020 JP 2020143263
(43) Date of publication of application: 05.07.2023
(73) Proprietor: Ricoh Company, Ltd., Tokyo 143-8555 (JP)
(72) Inventor: YOSHIOKA, Tatsuroh, Tokyo 143-8555 (JP)
(74) Representative: Marks & Clerk LLP
(86) International application number: PCT/JP2021/031245
(87) International publication number: WO 2022/045220

(56) References cited:
- US-A1- 2006 192 996
- US-A1- 2020 218 950

## Description

### [Technical Field]

The present disclosure relates to an information processing apparatus, a program, and an information processing system.

### [Background Art]

There are cases where it is desired to determine whether or not two images are the same. For example, in a field such as commercial printing where a high-level quality print-outs are demanded, a user may be inclined to evaluate whether print-outs of the same image quality can be obtained even after changing the printer driver due to an upgrade. Also, a printer description language (PDL) module that performs rendering on an image forming apparatus such as a printer is operated, and there are cases where the PDL module also gets upgraded. In this case as well, a user may be inclined to evaluate whether a print-outs of the same image quality can be obtained.

Tasks regarding such a kind of evaluation are conventionally performed by visual inspection, however techniques for automating these tasks are being devised (see PTL 1, for example). In PTL 1, an evaluation of an image forming apparatus that is an evaluation target is described. A host computer sends a print job and a setting value to the image forming apparatus that is the evaluation target and then the image forming apparatus creates image data based on the print job and the setting value and sends the created image data to the host computer. In the host computer, the image forming apparatus that is the evaluation target is evaluated by comparing the image data created by the image forming apparatus that is the evaluation target against stored image data created by using a previous version of a printer.

### [Citation List]

### [Patent Literature]

[PTL 1] Japanese Unexamined Patent Application Publication No. 2008-33472. US-A-2020218950 discloses a method of assessing a calibration of a printing device including at least one test sample using the printing device.

### [Summary of Invention]

### [Technical Problem]

With conventional techniques, in a case where there are multiple determination methods capable of evaluating images, it has been problematic in that it is difficult to evaluate and compare evaluation results obtained by each of the determination methods.

It is an objective of an embodiment of the present disclosure to provide an information processing apparatus that is capable of comparing evaluation results obtained by multiple determination methods capable of evaluating images.

### [Solution to Problem]

The invention is set out in the appended set of claims.

### [Advantageous Effects of Invention]

According to an aspect of the present disclosure, comparison results obtained by multiple evaluation methods capable of evaluating images can be compared.

### [Brief Description of Drawings]

[FIG. 1]

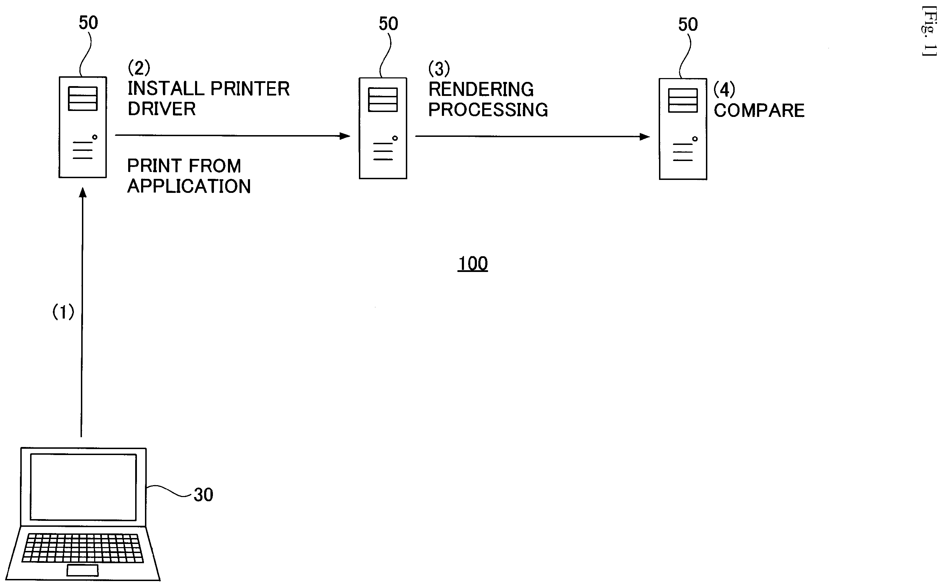

   FIG. 1 is a diagram illustrating an overview of processing by an information processing system 100;
[FIG. 2A]

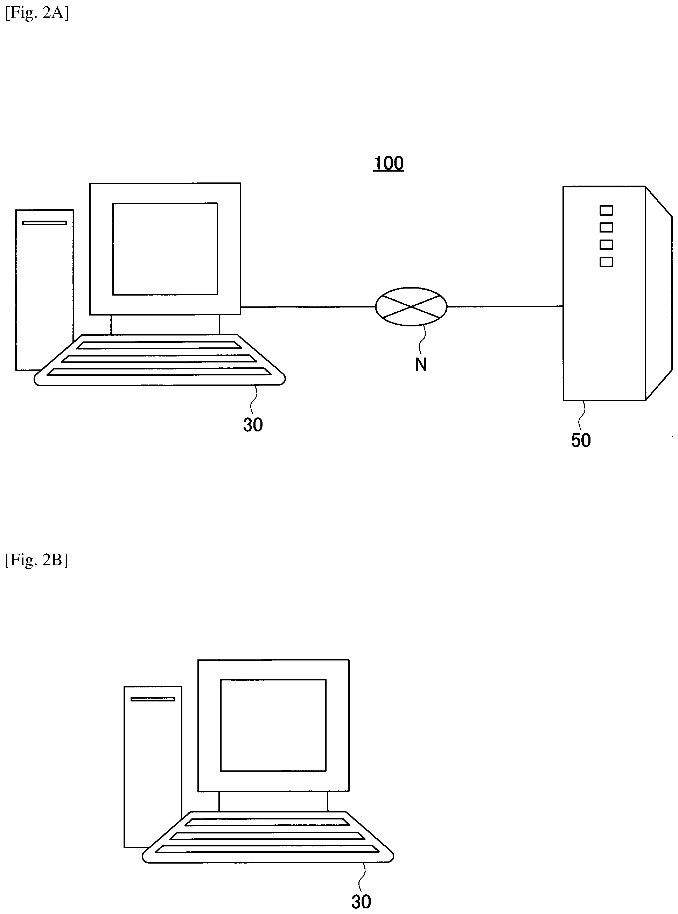

   FIG. 2A is a configuration diagram illustrating an example of the information processing system 100 according to an embodiment;
[FIG. 2B]
   FIG. 2B is a configuration diagram illustrating an example of a terminal apparatus 30 according to an embodiment;
[FIG. 3]

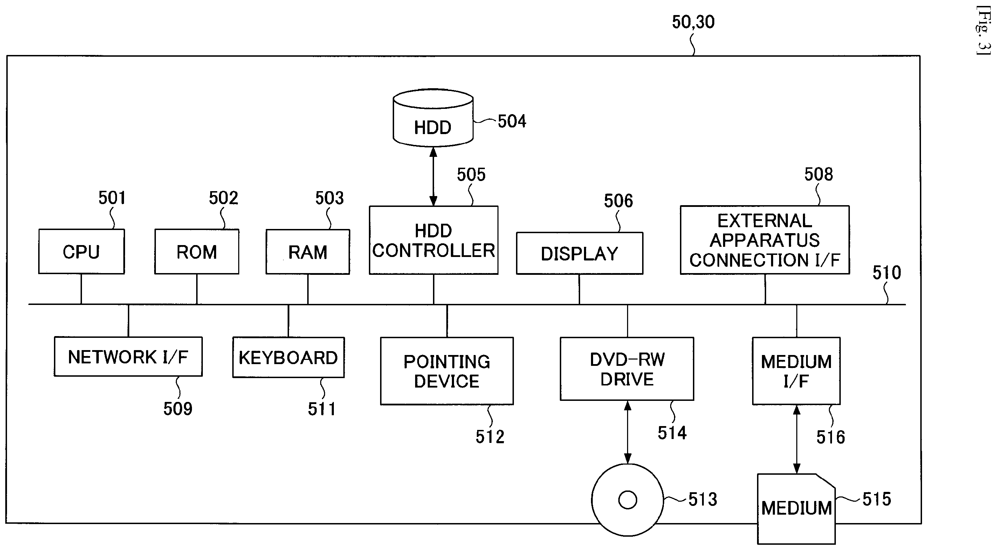

   FIG. 3 is a hardware configuration diagram of the terminal apparatus 30 or an information processing apparatus 50;
[FIG. 4]

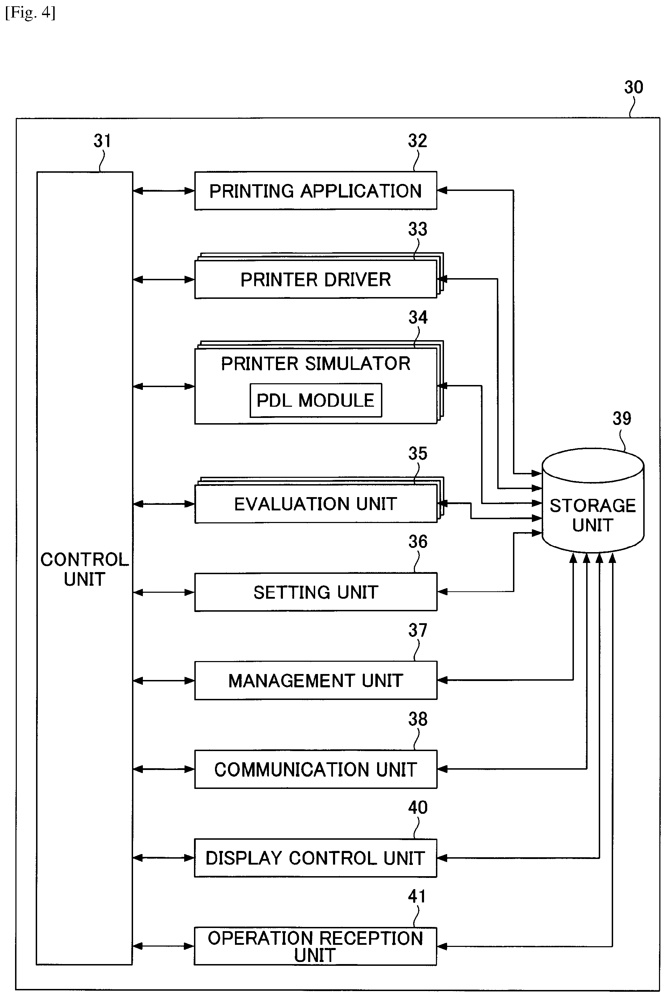

   FIG. 4 is an example of a functional block diagram for describing functions of the terminal apparatus 30 in blocks;
[FIG. 5]

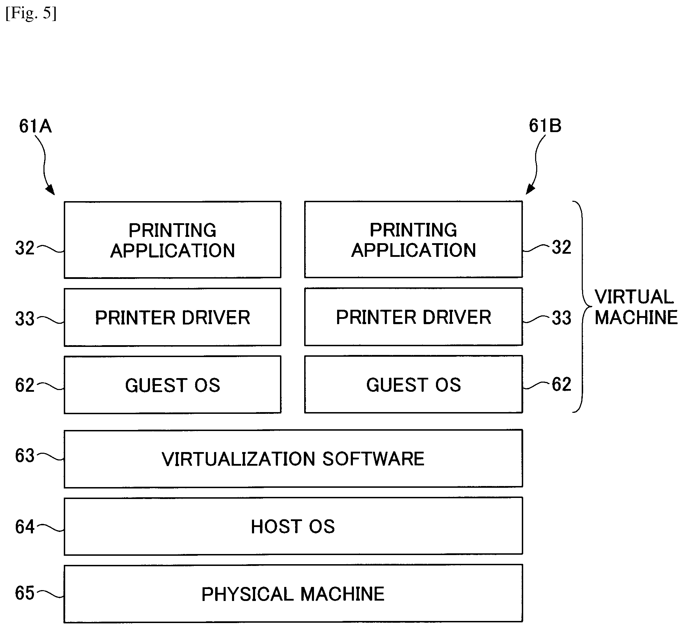

   FIG. 5 is a configuration diagram of an example of virtual machines 61A and 61B constructed by the terminal apparatus 30;
[FIG. 6]

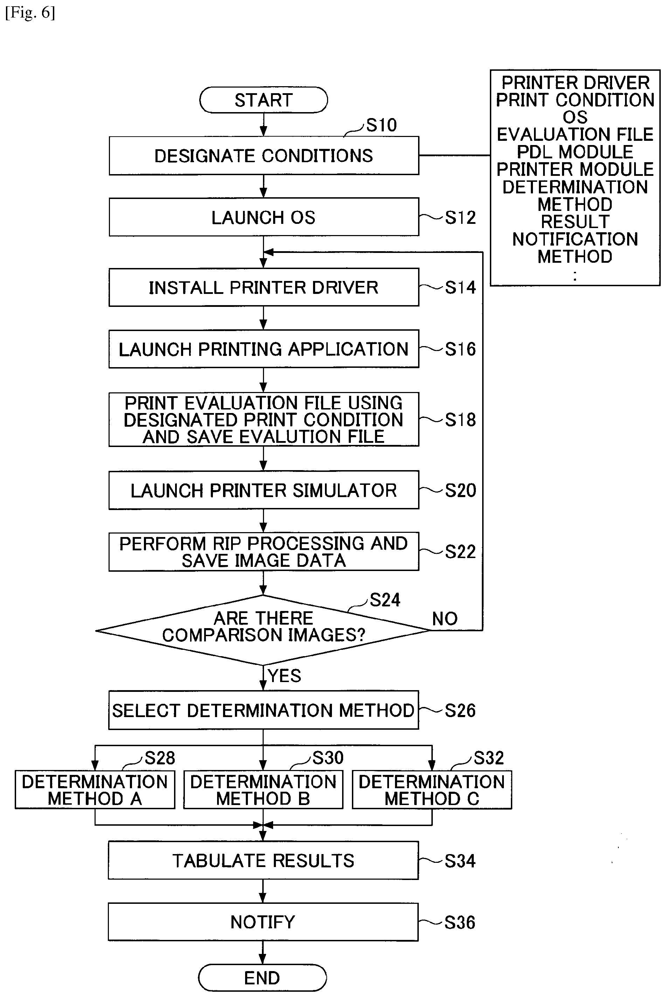

   FIG. 6 is a diagram for describing a flow of processing that is performed by the terminal apparatus 30;
[FIG. 7]

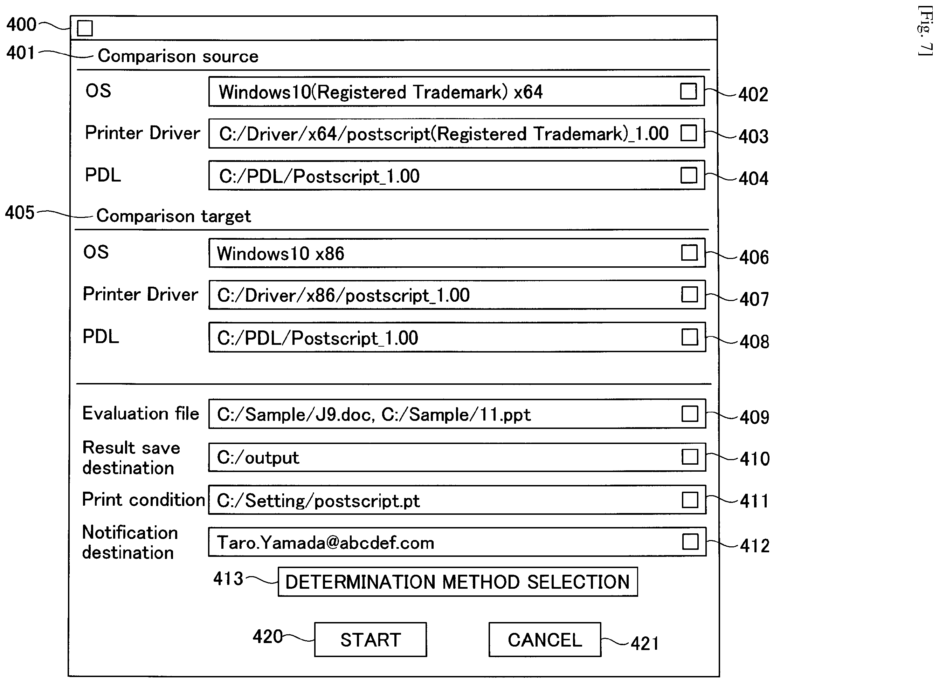

   FIG. 7 is an image diagram of an example of a setting screen 400 to be displayed by the terminal apparatus 30;
[FIG. 8]

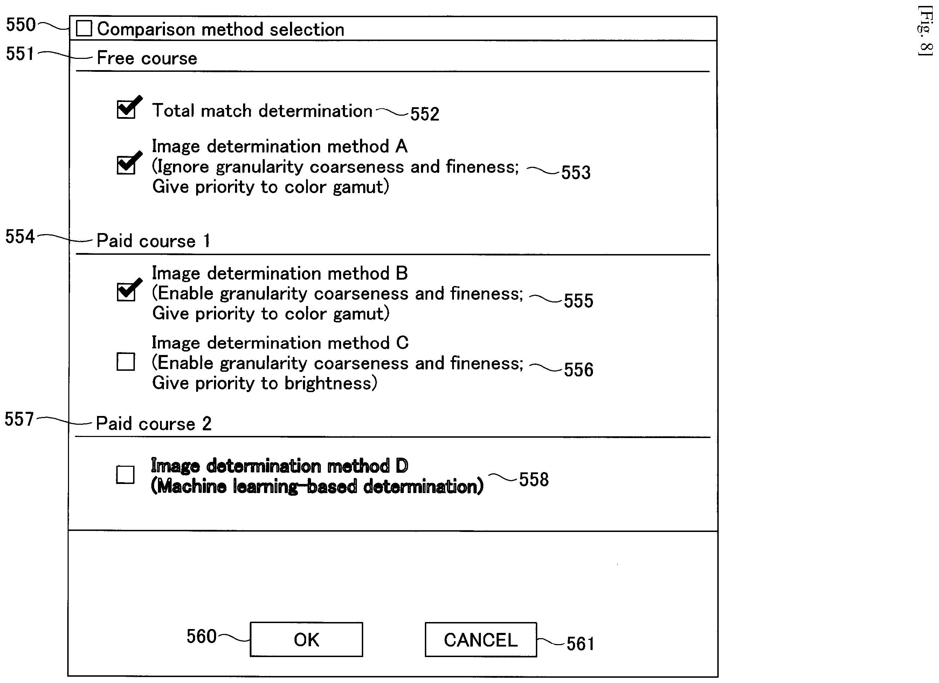

   FIG. 8 is an image diagram of an example of a determination method selection screen 550;
[FIG. 9]

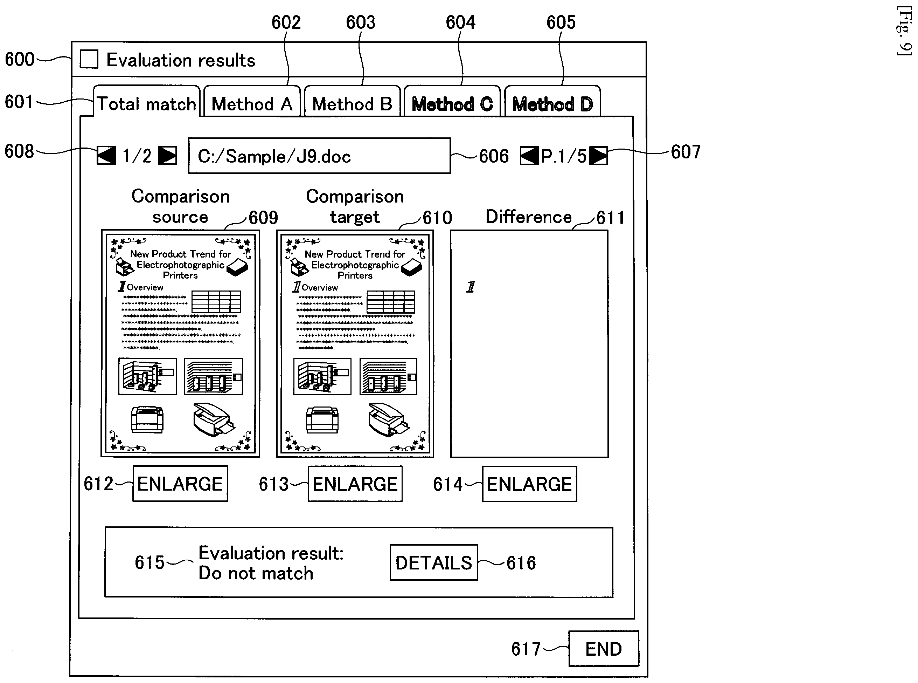

   Fig. 9 is an image diagram of an example of an evaluation results screen 600;
[FIG. 10]

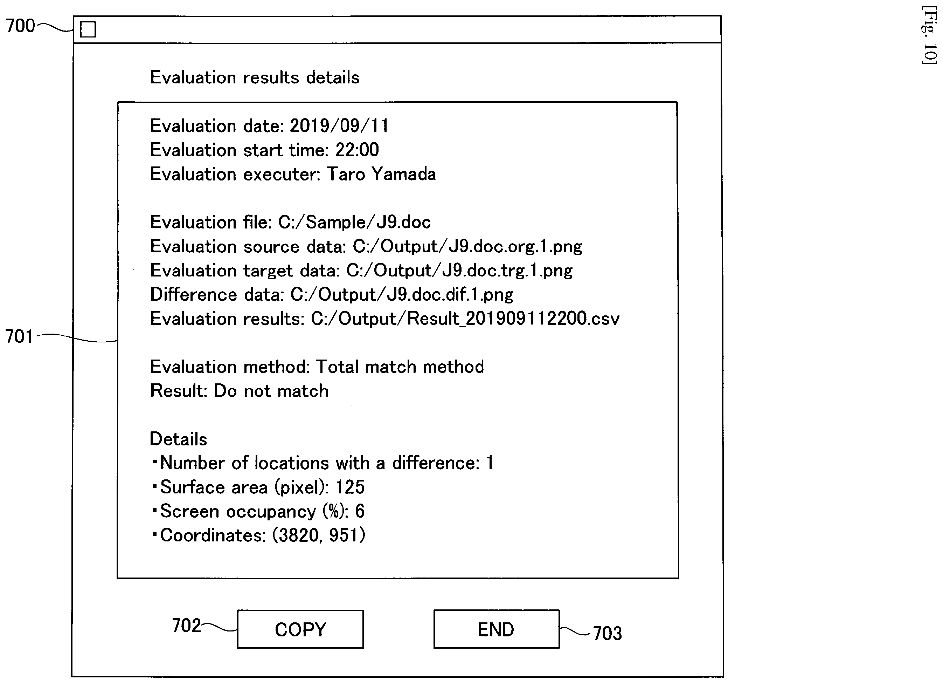

   FIG. 10 is an image diagram of an example of a detailed evaluation results screen 700;
[FIG. 11]
   FIG. 11 is a diagram for describing an example of a flow of processing that takes place upon starting of the evaluation performed by the terminal apparatus 30;
[Fig.12]FIG. 12 illustrates an example of initial value information containing registered initial values that is displayed on the setting screen 400;
[Fig.13] FIG. 13 is a diagram illustrating an example of details of files of the evaluation results;
[Fig.14]FIG. 14 is a diagram illustrating an example of details of files of the detailed evaluation results; and
[Fig.15]FIG. 15 is an example of a functional block diagram for describing functions of the terminal apparatus 30 and the information processing apparatus 50 in blocks.

### Description of Embodiments

Hereinafter, the embodiments of the present disclosure are described with reference to the drawings.

### <Overview of operations>

In the present embodiment, an information processing apparatus that received a request of a user from a terminal apparatus capable of communicating via a network or the information processing apparatus that received a request of the user via keyboard or the like executes a printer simulator to create a print-processing image that was conventionally created by an image forming apparatus. In the present embodiment, multiple print-processing images can be created by the information processing apparatus without there being an actual image forming apparatus, and the evaluation results obtained by multiple determination methods capable of evaluating the images can be compared.

FIG. 1 is a diagram illustrating an overview of processing by an information processing system 100.
(1) On a setting screen displayed by a terminal apparatus 30, a user inputs settings regarding an image sameness determination, and then presses the start button. The image sameness determination is an example of image evaluation. The terminal apparatus 30 transmits the settings regarding sameness determination to an information processing apparatus 50. By performing the image sameness determination, the information processing apparatus 50 can evaluate the impact of the printer driver, the printer simulator, the OS, or the like being modified.
(2) After the information processing apparatus 50 installs the printer driver set from the setting screen by the user and a printing application calls the printer driver with respect to an evaluation file (file serving as the original source of image generation), the printer driver creates a file for printing written in Printer Description Language (PDL). The OS and the printer simulator are set by a user on the setting screen. Also, a print condition and the evaluation file may have an impact on image quality.
(3) Typically, the file for printing is transmitted to the image forming apparatus, and then a PDL module operated by the image forming apparatus performs rendering and prints onto paper. In the present embodiment, a printer simulator (PDL module) launched within the information processing apparatus 50 performs rendering processing and without anything being transmitted to an image forming apparatus. Therefore, in the present embodiment, an image for print processing, i.e. a print-processing image, gets created within the information processing apparatus 50.
(4) The information processing apparatus 50 stores the created print-processing image into a storage unit thereof. The stored print-processing image is compared against a print-processing image of a comparison target or a comparison source described further below and created in the same manner, and then evaluation results by one or more determination methods are generated.

As described, with the present embodiment, a configuration of the information processing system 100 can be simplified because evaluation results of multiple determination methods capable of evaluating images can be generated without using the image forming apparatus to evaluate the impact that printer driver differences, PDL module differences, or OS difference have on an image, and thus evaluation costs can be reduced.

### <Terminology>

A printer simulator is software for re-creating, on an information processing apparatus, image processing performed by an image forming apparatus. The printer simulator in the present embodiment has at least a PDL module and has a rendering function.

Image evaluation refers to an inspection for determining whether an image satisfies a predetermined level of quality. Image evaluation includes, for example, comparing a comparison target image against a comparison source image, and estimating the extent of differences based on this comparison. Therefore, there is a sameness determination between two images as one example of image evaluation.

The evaluation results include information regarding the level of image quality and may include, for example, the extent of a difference. The determination method capable of evaluating images may include a total match determination method that methodically determines that images do not match if the difference is greater than or equal to a predetermined threshold and an obscure match determination that determines whether or not there is a difference that is not perceptible to the human eye. The word match may be referred to as similar. The word non-matching may be referred to as dissimilar. Also, the determination methods capable of evaluating images may include determination methods for evaluating images based on whether granularity coarseness and fineness are to be ignored or enabled and whether or not priority is to be given to the color gamut or is to be given to brightness.

FIG. 2A and FIG. 2B are configuration diagrams illustrating an example of the information processing system 100 and the terminal apparatus 30 according to the present embodiment. FIG. 2A is the example of the information processing system 100 according to the present embodiment and is a system configuration in which an information processing apparatus 50 equivalent to a client-server type server determines the sameness of two images.

In the information processing system 100, the terminal apparatus 30 and the information processing apparatus 50 can communicate via a network N. The information processing apparatus 50 is also called a server or a server apparatus, is mainly an apparatus for performing information processing on the network N, and is an apparatus that responds with information or processing results in response to a request received via the network N. The information processing apparatus 50 may reside on the Internet or may reside on-premise. In any of the embodiments, the information processing system 100 may be called a cloud system. The cloud system refers to a system in which resources are used on the network N without concern for specific hardware resources.

The information processing apparatus 50, as a so-called web server, generates webpage screen information for handling processing (information that is written in HTML, XML, script language, cascading style sheet (CSS), and the like, and mainly interpreted by the Web browser and displayed), and provides the generated information to the terminal apparatus 30. The terminal apparatus 30 launches the Web browser and displays webpages by receiving screen information. On a single webpage, there is an interface for receiving settings for a sameness determination of two images. The user designates (sets) one or more among an OS, printer driver, PDL module, and the like, and requests the information processing apparatus 50 to perform sameness determination processing.

The webpage may be provided by a web application. The web application is operated by cooperation between a program written in a programming language such as JavaScript (registered trademark) that operates on a browser and a program provided by a web server. Further, the web application refers to a mechanism that implements such software. Webpages can be changed dynamically by the web application.

The terminal apparatus 30 receives screen information from the information processing apparatus 50, and displays the received information on the web browser. Then the terminal apparatus 30 receives, from the user, an operation (selection operation) including settings regarding a sameness determination of two images. The web browser implemented by the terminal apparatus 30 transmits the setting regarding the sameness determination to the information processing apparatus 50, and requests processing of the sameness determination.

Regarding the terminal apparatus 30, application software dedicated to the information processing system 100 instead of the web browser may be operated by the terminal apparatus 30. Also, the evaluation results obtained by the sameness determination may be sent by the information processing apparatus 50 or may be saved on the network N in addition to being displayed on the terminal apparatus 30.

FIG. 2B is an example of the terminal apparatus 30 according to the present embodiment and the terminal apparatus 30 alone performs a sameness determination on two images. Examples of the terminal apparatus 30 include a personal computer (PC), a tablet terminal, a PDA, a smartphone, an interactive whiteboard, a video conference terminal, and the like.

### <Hardware configuration>

FIG. 3 is a hardware configuration diagram of the terminal apparatus 30 or the information processing apparatus 50. Here, it is assumed that the hardware configuration of the information processing apparatus 50 is what is being described.

The information processing apparatus 50 is a computer and includes a central processing unit (CPU) 501, a read-only memory (ROM) 502, a random access memory (RAM) 503, a hard disk drive (HDD) 504, an HDD controller 505, a display 506, an external apparatus connection interface (I/F) 508, a network I/F 509, a bus line 510, a keyboard 511, a pointing device 512, a digital versatile disk rewritable (DVD-RW) drive 514, and a medium I/F 516.

The CPU 501 controls the overall operation of the information processing apparatus 50. The ROM 502 stores programs used for driving the CPU 501, such as an initial program loader (IPL). The RAM 503 is used as a work area for the CPU 501. The HDD 504 stores various types of data such as programs. The HDD controller 505 controls reading or writing of various types of data from or to the HDD 504 in accordance with the control of the CPU 501.

The display 506 displays various types of information such as a cursor, menus, windows, characters, and images. The external apparatus connection I/F 508 is an interface for connecting various types of external apparatuses. In this case the external apparatus is, for example, a universal serial bus (USB) memory or a printer. The network I/F 509 is an interface for performing data communication using the communication network. The bus line 510 is, for example, an address bus, a data bus, or the like for electrically connecting constituent elements such as the CPU 501.

The keyboard 511 is a type of input means having multiple keys for inputting characters, numerical values, various instructions, and the like. The pointing device 512 is a type of input means for selecting and executing various instructions, selecting a processing target, moving a cursor, and the like. The DVD-RW drive 514 controls reading or writing of various types of data from or to the DVD-RW 513 as an example of a removable recording medium. It should be noted that the removable recording medium is not limited to the DVD-RW, and may be a DVD-R or the like. The medium I/F 516 controls reading or writing (storing) of data from or to the recording medium 515 such as a flash memory.

### <Functional configuration>

First, the functional blocks of the terminal apparatus 30 in the case of FIG. 2B are described. FIG. 4 is an example of the functional block diagram for describing the functions of the terminal apparatus 30 in blocks.

### <<Terminal apparatus>>

The terminal apparatus 30 includes a control unit 31, a printing application 32, one or more printer drivers 33, one or more printer simulators 34, one or more evaluation units 35, one or more setting units 36, a management unit 37, a communication unit 38, a storage unit 39, a display control unit 40, and an operation reception unit 41. These functional units of the terminal apparatus 30 are functions or means that are implemented by or that are caused to function by operating any of the elements illustrated in FIG. 3 in cooperation with instructions of the CPU 501 in accordance with a program read from the HDD 504 to the RAM 503.

The communication unit 38 communication is for external communication and sends and receives various types of information. For example, the communication unit 38 sends evaluation results of images by email. The control unit 31 controls the overall processing regarding the sameness determination. For example, the control unit 31 manages the flow of processing based on settings regarding the sameness determination received from the user and calls any of the necessary user functions from the printing application 32 to the operation reception unit 41. The control unit is configured to cause the one or more evaluation units for which settings are received to evaluate the image. As the control unit 31, control tools such as Jenkins are known. Further, the control unit 31 may be used in robotic process automation (RPA). RPA is a concept of a software type robot in personal computers that substitutes and automates deskwork (mainly fixed-form work).

The printing application 32 is application software that runs on an OS installed in the terminal apparatus 30. The printing application 32 can open an evaluation file, call a printer driver 33, and start printing the evaluation file. Examples of the printing application 32 include word processing software, web browser software, illustration software, paint software, and the like. Alternatively, there may be two or more printing applications 32. In the case where there are multiple printing applications 32, the terminal apparatus 30 performs sameness determination with different evaluation files.

The printer driver 33 is software that is run on the OS installed in terminal apparatus 30. The printer driver 33 is software that allows a user to use the image forming apparatus easily by connecting the computer and image forming apparatus. The printer driver 33 has a function of displaying a user interface screen for receiving print settings (also referred to as the print condition) and a function of generating print data described in PDL. Examples of PDL include PostScript (registered trademark), Printer Control Language (PCL), and the like. In addition to these, in PDL, there are many different types of formats that differ depending on the manufacturer of the image forming apparatus. In the image forming apparatus, PDL modules corresponding to respective PDL are run.

The printer simulator 34 is software that runs on the OS installed in the terminal apparatus 30. The printer simulator 34 performs rendering executed by an image forming apparatus. Rendering is also referred to as raster image processor (RIP), drawing processing, or the like. Software that performs the rendering is also referred to as a PDL module or a drawing processing unit. The printer simulator 34 has one or more PDL modules. It should be noted that the printer simulator 34 may reside on a network that the terminal apparatus 30 can access, besides residing in the terminal apparatus 30.

The PDL module performs color matching processing and screening processing, and generates an image for a print-processing image for each color of cyan (C), magenta (M), yellow (Y), and black (K) to be used by the image forming apparatus for printing. For example, color matching processing for converting image data of inputted colors (monochrome is also acceptable) at an optimum conversion ratio in order for the image forming apparatus to print in the four color toners C, M, Y, and K. The print data inputted from the printing application 32 may be expressed in an RGB color space or may be expressed in a CMYK color space. In a case where the printing application 32 is a conventional printing application, the RGB color space is adopted.

After converting the print data of the RGP color space into a device independent color space by the color matching processing, the printer simulator 34 then performs conversion into a device color space that suits the characteristics of the image forming apparatus to convert the print data into CMYK color space. A publicly-known RGB to CMYK conversion technique may be used or a conversion technique optimized for the image forming apparatus may be used.

The screening processing is processing for expressing a difference in shading through an optical illusion by changing the size or density of half-tone dots in a pseudo-gradation expression method such as a dither method or the like, and is processing for converting bitmap data into a print-processing image that can be printed by the image forming apparatus. In the print-processing image, 1 (ON: draw) or 0 (OFF: do not draw) is set for each dot corresponding to a pixel drawn as a point by laser or ink.

The evaluation unit 35 is an application module that is run on the terminal apparatus 30. The evaluation unit 35 compares two print-processing images of interest and evaluates whether the images can be deemed the same, for example. Further, the evaluation unit 35 generates difference information of the two print-processing images. For example, the evaluation unit 35 compares whether the pixels (CMYK) are the same for each pixel position defined by the resolution of the images, and then generates difference information.

The setting unit 36 is a module that is run on the terminal apparatus 30. The setting unit 36 generates a screen for receiving settings regarding sameness determination of a condition or the like for comparing images. The settings regarding sameness determination that are received from the user by the setting unit 36 are used by the management unit 37 for controlling overall processing regarding sameness determination.

The management unit 37 manages settings regarding the sameness determination received by the setting unit 36 from the user and manages the evaluation results of the two print-processing images. Further, the management unit 37 may be configured to manage processing for sending the evaluation results of the images to the user by email or processing for sending the evaluation results of the images to the user by a chat system.

The display control unit 40 displays various screens on the display 506. For example, the display control unit 40 displays a screen for receiving settings regarding sameness determination of conditions and the like for image comparison, and displays a screen for the evaluation results of the images. The operation reception unit 41 receives various types of operations with respect to the screen that is displayed by the display control unit 40.

Also, the storage unit 39 is the HDD 504, the RAM 503, or both, which are illustrated in FIG. 3. The print-processing images, the difference information, the evaluation results, and the like are stored in the storage unit 39.

### <Virtual machine>

The print-processing images that are generated by the terminal apparatus 30 are impacted by various factors such as the OS, the printer driver 33, the PDL module, the print condition, evaluation file, and the like. At least with respect to the OS, it takes time for the user to perform the task of changing the OS of the terminal apparatus 30. Therefore, if a virtual machine is used by the terminal apparatus 30, any guest OS can be installed by the terminal apparatus 30 while keeping the host OS that runs on the terminal apparatus 30 as is. Also, since multiple virtual machines can also be constructed on the host OS, the burden of installing a guest OS can be reduced. Therefore, in the present embodiment, the terminal apparatus 30 generates print-processing images on the virtual machine, and evaluates the print-processing images.

FIG. 5 is a configuration diagram of an example of virtual machines 61A and 61B constructed by the terminal apparatus 30. The virtual machines 61A and 61B are information processing apparatuses that run independently and are constructed on one terminal apparatus 30 by use of virtualization technology. A physical machine 65 illustrated in FIG. 5 is equivalent to conventional hardware of the terminal apparatus 30 illustrated in FIG. 3. A host OS 64 is an OS that is run directly by the terminal apparatus 30. A virtualization software 63 is run on the host OS 64. The virtualization software 63 uses virtualization technology and is software that emulates hardware for the virtual machines 61A and 61B. Examples of the virtualization software 63 include VMware (registered trademark), Microsoft Virtual PC (registered trademark), and the like.

The guest OS 62 is a typical OS and is one factor that can have an impact on print-processing images in the present embodiment. To the guest OS 62, the virtualization software 63 appears as just an information processing apparatus. Therefore, the virtual machines 61A and 61B run independently from other virtual machines or the host OS 64. Therefore, the same components as normal can be used for the printing application 32, the PDL module, and the printer driver 33. Although the virtual machine illustrated in FIG. 5 is called a host type, a hypervisor-type virtual machine may be used.

### <Overall processing flow>

Next, the overall flow of processing performed by the terminal apparatus 30 is described with reference to FIG. 6. FIG. 6. is a diagram for describing a flow of processing that is performed by the terminal apparatus 30. As illustrated in FIG. 6, the terminal apparatus 30 generates a print-processing image of a comparison source and a print-processing image of a comparison target based on designated evaluation conditions, and then evaluates the images. It should be noted that all of the processing will in FIG. 6 will not necessarily be completed in a single sameness determination. For example, in a case where the print-processing image of the comparison source or the comparison target is already generated, image generation is unnecessary, so if the printer driver 33 is already installed, installation is unnecessary.

In step S10, the user designates evaluation conditions on a setting screen displayed on the terminal apparatus 30. The setting screen is described further below. Examples of the evaluation conditions to be designated in step S10 include the printer driver 33, a print condition, an OS, an evaluation file, a PDL module, a printer model, a determination method, a result notification method, and the like. The control unit 31 of the terminal apparatus 30 starts evaluation of the images based on the evaluation conditions designated in step S10.

In step S12, the control unit 31 launches OSs (the OS of the comparison source and the OS of the comparison target) designated to be used for the evaluation as an evaluation condition in step S10 on the virtual machines as the guest OSs 62. In a case where the OSs are already launched, launching may be skipped.

In step S14, the control unit 31 installs the printer driver 33 of the comparison source to the corresponding guest OS 62 of the comparison source or installs the printer driver 33 of the comparison target to the corresponding guest OS 62 of the comparison target, whichever is designated as the evaluation condition in step S10. At this time, in the port of the print destination, the storage unit 39 is designated. In a case where the printer driver 33 is already installed, installation can be skipped.

In step S16, the control unit 31 launches the printing application 32 of the comparison source or the comparison target of the evaluation file designated as the evaluation condition in step S10. In step S18, the printing application 32 of the comparison source or the comparison target prints the evaluation file stored in the storage unit 39 using the print condition designated in step S10, and saves the generated print data of the comparison source or the comparison target in the storage unit 39. In this way, the printing application 32 of the comparison source or the comparison target generates the print data of the comparison source or the comparison target based on the evaluation conditions designated in step S10.

In step S20, the control unit 31 launches the printer simulator 34 of the PDL module of the comparison source or the comparison target designated as the evaluation condition in step S10. In step S22, the printer simulator 34 of the comparison source or the comparison target performs RIP processing (drawing processing) on the print data of the comparison source or the comparison target generated in step S18, and then saves the image data (image for print processing, i.e. print-processing image) of the comparison source or comparison target in the storage unit 39. The print-processing image is created in PNG format, for example. The user can modify the initial settings file, which is described further below, so that the print-processing image can be created in another format such as JPEG, TIFF, and the like.

For example, the control unit 31 generates a print-processing image of the comparison source in the processing of steps S14 to S22 of the first iteration, and generates a print-processing image of the comparison target in the processing of steps S14 to S22 of the second iteration. In step S24, the control unit 31 examines whether the print processing image of the comparison target is saved in the storage unit 39.

If the print-processing image of the comparison target is not saved, the control unit 31 returns processing to steps S14 to S22 of the second iteration to generate the print processing image of the comparison target. If the print-processing image of the comparison target is saved, the control unit 31 selects, in step S26, a determination method designated as an evaluation condition in step S10.

In the present embodiment, the user can designate multiple determination methods (image comparison methods) capable of evaluating print-processing images (image data) of the comparison source and the comparison target. The flowchart in FIG. 6 is an example in which a determination method A, a determination method B, and a determination method C are designated as evaluation conditions. In this case, three types of determination methods are used, the print-processing images of the comparison source and the comparison target are compared, and evaluation results are created.

For example, in step S28, the control unit 31 uses the determination method A, compares the print-processing images of the comparison source and the comparison target, and creates evaluation results. In step S30, the control unit 31 uses the determination method B, compares the print-processing images of the comparison source and the comparison target, and creates evaluation results. Further, in step S32, the control unit 31 uses the determination method C, compares the print-processing images of the comparison source and the comparison target, and creates evaluation results.

In step S34, the control unit 31 notifies the management unit 37 of the evaluations results created in steps S28, S30, and S32. The management unit 37 tabulates the evaluation results created in steps S28, S30, and S32, and saves the tabulated evaluation results into the storage unit 39.

In step S36, the management unit 37 notifies the user that evaluations by comparison of the print-processing images of the comparison source and the comparison target are completed, and provides the evaluation results by displaying the evaluation results on the display 506 or by sending an email. For example, the email that is sent to the user may list the evaluation results or indicate a URL for the saves evaluation results.

In FIG. 6, the generation of the print-processing image of the comparison source and the generation of the print-processing image of the comparison target are executed in sequence but both may be executed in parallel fashion to shorten the time needed.

### <Setting screen>

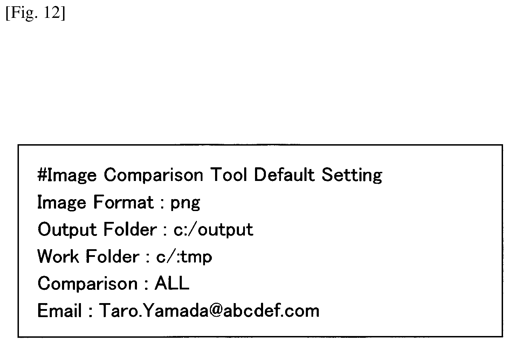

FIG. 7 is an image diagram of an example of a setting screen 400 to be displayed by the terminal apparatus 30. The initial values displayed on the setting screen 400 are saved by the control unit 31. FIG. 12 illustrates an example of initial value information containing registered initial values that is displayed on the setting screen 400. For example, the initial value information of FIG. 12 is saved in "c:/setting.ini" file. "#Image Comparison Tool Default Setting": is the title of this file. "Image Format": is the print-processing image format (file extension). "Output Folder": is the address of the output destination to where the print-processing image is to be outputted. "Work Folder": is the folder in which the print data or the evaluation file is temporarily saved. "Comparison": is for setting whether the comparison method is to be total match, i.e. ALL, or to be fuzzy match. "Email": is the email address of the transmission destination for the evaluation results.

The control unit 31 notifies the setting unit 36 of the initial value information of FIG. 12, and thus the setting unit 36 can generate the setting screen 400 in which the initial values are set.

The description is continued referring back to FIG. 7. The setting screen 400 of FIG. 7 includes a comparison source section 401, a comparison target section 405, and a section for other settings. The comparison source section 401 and the comparison target section 405 have the same items. The guest OSs are set in OS 402 and OS 406. The printer drivers 33 are set in Printer Driver 403 and Printer Driver 407. The PDL modules (drawing processing units) are set in PDL 404 and PDL 408. It should be noted that the printer simulator 34 is set once the PDL module is set.

In the OS 402 of the comparison source section 401 of FIG. 7, "64-bit version of Windows 10 (Registered Trademark)" is set to be used. In the Printer Driver 403, the package of "C:Driver/x64/postscript_1.00" is set to be used. Further, in the PDL 404, the PDL module of "C:/PDL/Postscript_1.00" is set to be used.

In the OS 406 of the comparison target section 405 of FIG. 7, "32-bit version of Windows 10 (Registered Trademark)" is set to be used. In the Printer Driver 407, the package of "C:Driver/x64/postscript.1.00" is set to be used. Further, in the PDL 408, "C:/PDL/Postscript_1.00" is set to be used.

Next, the items of the section for the other settings is described. An evaluation file field 409 is the field where the file name of the evaluation file to be used for evaluating an image is set. Multiple evaluation files can be set by the user. Also, the user can also set files such as a PRN file or a PDF file that can be sent directly to the image forming apparatus without the need to use the printing application 32. Further, the user can also directly designate image data such as PNG, JPEG, TIFF, and BMP file formats. Results save destination field 410 is a field in which the save destination of the evaluation results is set. The evaluation results are, for example, a CSV file, a text file, an XML file, or another format. It should be noted that the print-processing images of the comparison source and the comparison target and the difference information of the two images are sent with the evaluation results to the evaluation results save destination. Regarding the evaluation results, the images RIP processed under the conditions set in the comparison source section 401 and the comparison target section 405 and the evaluation (comparison) of the images are saved.

With respect to the conditions between the conditions set in the comparison source section 401 and the comparison target section 405 of FIG. 7, since the OSs are different, an evaluation can be performed as to whether there are any differences between the images across the OSs. Also, if the OS and the printer driver 33 are set to be the same in the comparison source section 401 and the comparison target section 405, and the PDLs are changed to be different from each other, the PDL modules can also be evaluated. Further, if the OS and the PDL module are set to be the same in the comparison source section 401 and the comparison target section 405, and the printer drivers 33 are changed to be different from each other, the printer drivers 33 can also be evaluated.

Although the OS, the printer driver 33, and the PDL module are used in the example of conditions to be set in the comparison source section 401 and in the comparison target section 405 on the setting screen 400 of FIG. 7, the conditions can be expanded to include the setting of printing applications to be used. The print condition field 411 is a field for setting a setting file containing a designated print condition with respect to the printer driver 33. With this, for example, the setting for printing multiple pages on a single sheet of paper, the setting for color management, and the like can in the print condition field 411. The notification destination field 412 is, for example, setting the email address of the evaluation results notification destination. The email address of the evaluation results notification destination can also be used in a case where a problem arises. Multiple email addresses may be set. Further, a user account of a chat system may be set in the notification destination field 412. With this, the terminal apparatus 30 can send the evaluation results by using the chat system.

Also, by pressing a determination method selection button 413, the user can display the determination method selection screen 550 of FIG. 8 on the display 506 and select a determination method. The evaluation of the images of the comparison source and the comparison target starts upon the pressing of a start button 420 by the user. Also, upon the pressing of a cancel button 421 by the user, any settings on the setting screen 400 get cancelled and a transition from the setting screen 400 to a portal screen or the like occurs. It should be noted that the setting screen 400 illustrated in FIG. 7 is one example and that conditions other than those described can be set such as an evaluation starting (scheduled) time, evaluation priority levels, and the like.

### <Determination method selection screen>

FIG. 8 is an example of the determination method selection screen 550. The determination method selection screen 550 is a screen that is displayed by pressing the determination method selection button 413 in FIG. 7 and is a user interface that enables the user to select determination methods (image determination methods) provided for use depending on the user contract (contract details) and conditions. On the determination method selection screen 550 of FIG. 8, total match determination for determining whether all of the pixels totally match and image determination methods A to D that allow a difference to some degree are selectable. In the total match determination and the image determination methods A to D, the image data of the comparison source and the image data of the comparison target are compared.

A free-course section 551 is a section for setting a free-course determination method and indicates free-course determination methods that can be used by anyone. A checkbox 552 is used for setting total match determination as the determination method to be used for image data evaluation. A checkbox 553 is used for setting image determination method A as the determination method to be used for image data evaluation. The free-course section 551 of FIG. 8 indicates an example where the total match determination and the image determination method A are set as determination methods to be used in image data evaluation.

A paid-course 1 section 554 is a section for setting determination method for a user who has made a contract for the paid-course 1 and indicates paid-course 1 determination methods that are useable by the user who has made the contract for the paid-course 1. For example, the determination of the contract is performed by a log-in ID or the like. FIG. 8 is an example of a user who has made the contract for the paid-course 1, and thus the image determination method B and the image determination method C displayed in the paid-course 1 section 554 are respectively settable by a checkbox 555 and a checkbox 556. The paid-course 1 section 554 of FIG. 8 indicates an example where the image determination method B is set as a determination method to be used for image data evaluation and the image data determination method C is left unset.

A paid-course 2 section 557 is a section for setting the determination method by the user who has made the contract for the paid-course 2 and indicates the determination method of the paid-course 2 that can be used by a user who has made the contract for the paid-course 2. FIG. 8 is an example in which the user has not made a contract for the paid-course 2, and thus the image determination method D displayed in the paid-course 2 section 557 is grayed-out and the image detection method D of the checkbox 558 is not settable.

The determination method set on the determination method selection screen 550 is saved upon the pressing of an OK button 560 by the user. Upon the pressing of a cancel button 561 by the user, any settings on the determination method selection screen 550 get cancelled and a transition to the setting screen 400 occurs.

### <Evaluation results display example>

FIG. 9 is an image diagram of an example of the evaluation results screen 600. The evaluation results screen 600 displays a tab 601 indicating the determination method evaluation results of the total match determination, a tab 602 indicating determination method evaluation results of the image determination method A, and a tab 603 indicating determination method evaluation results of the image determination method B, all of which were set on the determination method selection screen 550 of FIG. 8. Further, the evaluation results screen 600 includes grayed-out tabs namely a tab 604 indicating determination method evaluation results of the image determination method C and a tab 605 indicating determination method evaluation results of image determination method D, none of which were set on the determination method selection screen 550 of FIG. 8. The user can refer to the determination method evaluation results of the total match determination by selecting the tab 601. Also, the user can refer to the determination method evaluation results of the image determination method A by selecting the tab 602. Furthermore, the user can refer to the determination method evaluation results of the image determination method B by selecting the tab 603.

Also, the evaluation results screen 600 includes an evaluation file display field 606, a page designation field 607, and an evaluation file selection field 608. The evaluation file selection field 608 is the field where the user selects which file number among the evaluation files used for evaluation to open. FIG. 9 illustrates that the first of two evaluation files is selected.

The evaluation file display field 606 is a field for indicating the file name of the currently selected evaluation file. The page designation field 607 is the field where the user selects which page number image of the currently selected evaluation file is to be displayed.

Also, the evaluation results screen 600 has a comparison source image field 609, a comparison target image field 610, and a difference information field 611. In the comparison source image field 609, the print-processing image of the comparison source (image data) for the page, designated in the page designation field 607, within the evaluation file selected in the evaluation file selection field 608 is displayed. In the comparison target image field 610, the image data of the comparison target for the page, designated in the page designation field 607, within the evaluation file selected in the evaluation file selection field 608 is displayed.

In the difference information field 611, the difference between the image data of the comparison source and the image data of the comparison target is displayed as difference information. In the difference information field 611, the portion where a difference exists between the image data of the comparison source and the image data of the comparison target is displayed in a red highlight color, for example. It should be noted the coloring may be changed depending on the difference in the difference information field 611. For example, miniscule differences that fall short of being a total match are displayed in black and obscure non-matches are displayed in red. Images may be displayed for each color in CMYK in the comparison source image field 609, the comparison target image field 610, and the difference information field 611.

The evaluation results screen 600 also includes three enlargement buttons 612, 613, and 614. The three enlargement buttons 612, 613, and 614 are buttons for respectively enlarging the image data of the comparison source, the image data of the comparison target, and the difference information. Each of the images can be independently displayed as enlarged images when the user presses the corresponding buttons.

The evaluation results screen 600 also includes an evaluation result field 615, a details button 616, and an end button 617. The evaluation result field 615 displays an evaluation result of total match or do not match. The details button 616 is a button for displaying the details of the evaluation result. The end button 617 is a button for closing the evaluation results screen 600.

FIG. 10 is an image diagram of an example of a detailed evaluation results screen 700. The detailed evaluation results screen 700 displays evaluation results details. Content 701 indicates the evaluation date, the evaluation start time, the evaluation executer, the evaluation file, the comparison source data (file name of generated print-processing image of the comparison source), the comparison target data (file name of the generated print-processing image of the comparison target), the difference data (file name of difference information), the evaluation results (file name of the evaluation results), evaluation method, result, and the difference details.

The comparison source data (file name of the print-processing image of the comparison source) includes evaluation target file name (J9.doc), comparison source (org), and includes a page number (1). The same applies to the comparison target data and the difference data.

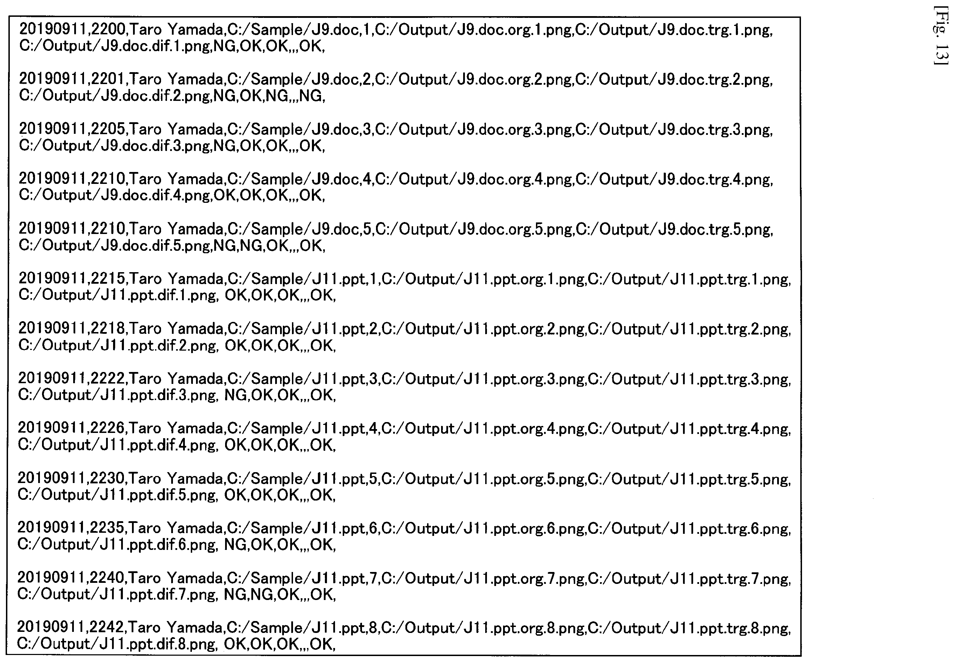

Also, the evaluation results file includes evaluation results by page for all of the evaluation files. The contents of the evaluation results file, "Result_201909112200.csv" illustrated in FIG. 10, is illustrated in FIG. 13 which is described further below.

The difference information of the difference details is indicated numerically. As illustrated in FIG. 10, the difference details includes the number of locations with a difference, the surface area, the screen occupancy, and the coordinates (x coordinate and y coordinate). The number of locations with a difference is the number of cases where there is an instance of continuous pixels (difference location) determined as having a difference, the surface area is the number of pixels of the difference location, the screen occupancy of the difference locations is the surface area divided by the total number of pixels, and the coordinates are the upper left coordinates of the difference location.

A copy button 702 is a button for copying the content of the detailed evaluation results to the clipboard. An end button 703 is a button used by the user to close the detailed evaluation results screen 700.

The content illustrated in FIG. 10 is simply an example. Other details of the evaluation results created by the evaluation unit 35 can be displayed as necessary.

### <Flow of processing after evaluation starts>

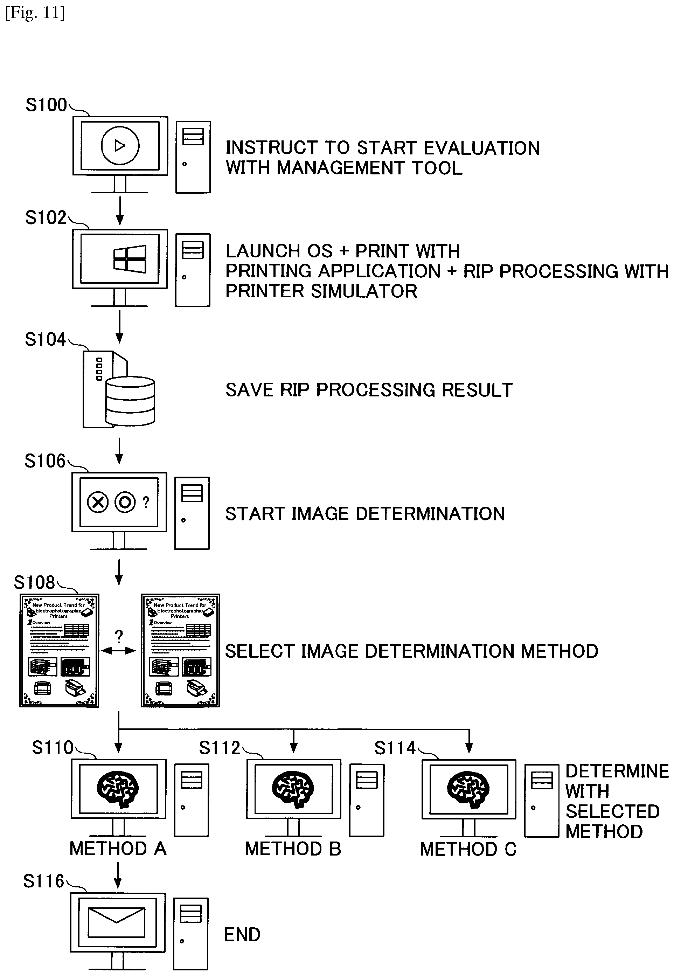

Next, the processing after the evaluation performed by the terminal apparatus 30 starts is described with reference to FIG. 11. FIG. 11 is a diagram for describing an example of the flow of processing after the evaluation performed by the terminal apparatus 30 starts.

In step S100, the terminal apparatus 30 receives an evaluation start instruction given by a user from the management tool or the like. In step S102, the terminal apparatus 30 launches, on a virtual machine, an OS designated on the setting screen 400 as the guest OS 62, and installs the printer driver 33 designated on the setting screen 400. Further, the terminal apparatus 30 launches the printing application 32 of the evaluation file designated on the setting screen 400. The printing application 32 performs printing (generates print data of the comparison source or the comparison target) of the evaluation file based on the print condition designated in step S10.

The terminal apparatus 30 launches the printer simulator 34 of the PDL module designated on the setting screen 400. The printer simulator 34 performs RIP processing (drawing processing) on the print data of the comparison source and the comparison target. In step S104, the terminal apparatus 30 saves the image data of the comparison source and the comparison target (print-processing images) onto the storage unit 39.

Once the image data of the comparison source and the comparison targeted has been prepared, the terminal apparatus 30 starts the evaluation (image determination) of the image data of the comparison source and the comparison target in S106. In step S108, the terminal apparatus 30 selects a determination method (image determination method) designated as an evaluation condition on the setting screen 400.

In steps S110, S112, and S114, the terminal apparatus 30 performs evaluation of the image data of the comparison source and the comparison target for each determination method selected in step S108, and saves the evaluation results onto the storage unit 39. In step S116, the terminal apparatus 30 notifies that evaluation of the image data of the comparison source and the comparison target is completed together with the evaluation results by email or by displaying this information on the display 506, for example. It should be noted that the notification provided to the user may include information regarding any unsuccessful processing that occurred along the way.

### <<Evaluation results by page>>

FIG. 13 is a diagram illustrating an example of contents of evaluation files. The evaluation results file is saved with a unique name to a save destination (folder) set in the results save destination field 410. For example, in the example of content 701 of FIG. 10, a file is saved with the following file name in csv format, "Result_201909112200.csv".

The contents of the file "Result_201909112200.csv" containing the evaluation results of the evaluation file "J9.doc" having 5 pages and the evaluation results of the evaluation file "J11.ppt" having 8 pages that are set in the evaluation file field 409 are as illustrated in FIG. 13.

The content of the evaluation results file of FIG. 13 from left to right is the evaluation date, the evaluation start time, the evaluation executer, the evaluation file, a page number, image corresponding to the page in the comparison source settings, image corresponding to the page in the evaluation target settings, difference image corresponding to the page, the total match determination result, the image determination method A determination result, the image determination method B determination result, and the image determination method C determination result, the image determination method D determination result, and the comprehensive evaluation result for the total match determination result through to the image determination method D.

According to the content of the evaluation results file of FIG. 13, the evaluation for the evaluation file "J9.doc" started at 22:00 on September 11, 2019. The first page was not a total match, was a match with the determination method A, was also a match with the determination method B, and thus was a match in the comprehensive determination result. It should be noted that there are no results for the determination methods C and D because they were not set. The second page was not a total match, was a match with the determination result A, was not a match with the determination result B, and thus was not a match in the comprehensive determination result. It should be noted that there are no results for the determination methods C and D because they were not set. Also, the image data of the output results created in the evaluation processing by each evaluation method are saved as a file in the description in the evaluation results.

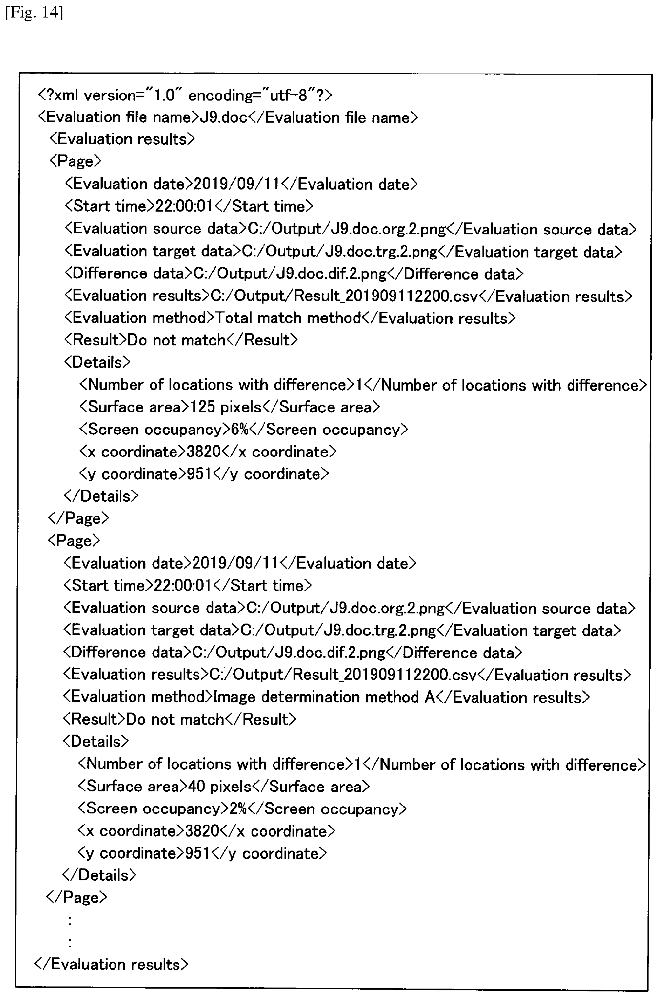

In order to display the detailed evaluation results screen 700 of FIG. 10, the detailed results for the respective evaluation files are saved as in FIG. 14. FIG. 14 is a diagram illustrating an example of content of the detailed evaluation results. The detailed evaluation results file is saved with a unique name to a save destination set in the results save destination field 410. For example, in the example of the content 701 of FIG. 10, the evaluation results of the evaluation file "C:/Sample/J9.doc" is saved as the file name "C:Output/J9.doc.log.xml".

The contents of the file of the evaluation results are as illustrated in FIG. 14. A file of evaluation results as illustrated in FIG. 14 is saved as evaluation results on a per determination method basis. It should be noted that although the XML format is used in the above example, any format may be used as long as separation is by file name and page and other items can be added.

Also, a determination method in which a machine-learning based determination is performed may be included in the determination methods settable by a user in the present embodiment. For the determination method in which a machine-based determination is performed, a trained model may be created using a neural network (deep learning) or the like by using a sufficient number of match and non-match human-based evaluation results. Once training is completed, the trained model can output a match or a non-match close to the evaluation results of a human.

Machine learning is a technique for acquiring the ability to learn like a person on a computer, and is a technique which autonomously generates an algorithm required for data identification and the like based on learning data acquired in advance, and predicting new data by applying the algorithm. The learning methods for machine learning may be either supervised learning, unsupervised learning, semi-supervised learning, reinforcement learning, or deep learning. Also, as the learning method for machine learning, any combination of these learning methods may be used. Examples of techniques of machine learning include perceptrons, deep learning, support vector machines, logistic regression, decision trees, random forests, and the like, but the techniques described in the present embodiment are not limited thereto.

### <<Other function configurations>>

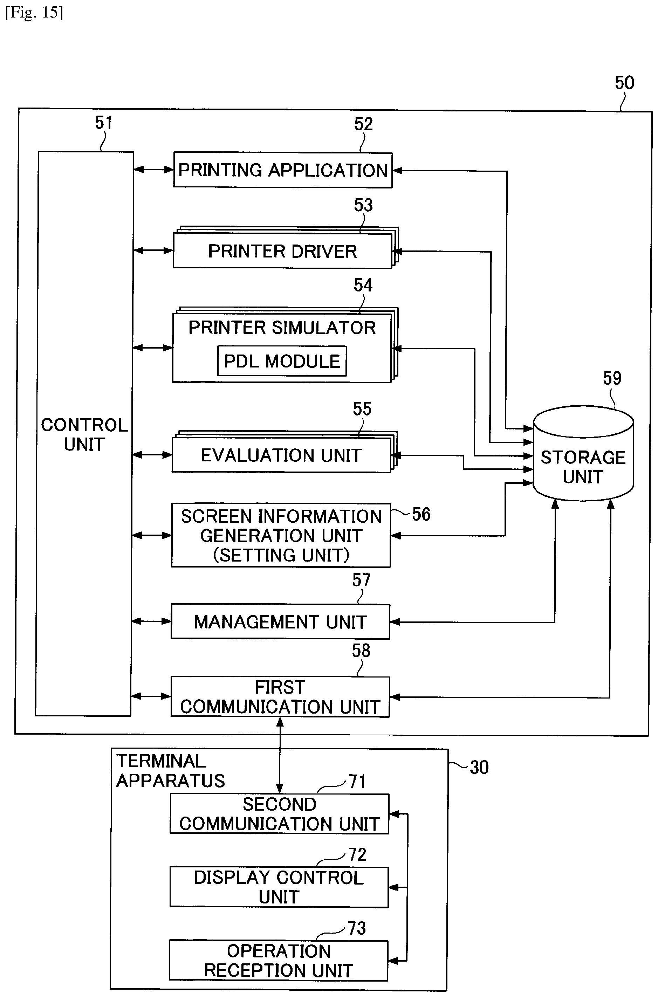

In the above, the functional blocks of the terminal apparatus 30 in the case of FIG. 2B were described. The functional blocks in the case of FIG. 2A are formed as illustrated in FIG. 15. FIG. 15 is an example of a functional block diagram for describing the functions of the terminal apparatus 30 and the information processing apparatus 50 in blocks.

### <<Information processing apparatus>>

The information processing apparatus 50 includes a control unit 51, a printing application 52, one or more printer drivers 53, one or more printer simulators 54, one or more evaluation units 55, a screen information generation unit 56, a management unit 57, a first communication unit 58, and a storage unit 59. These functional units of the information processing apparatus 50 are functions or means that are implemented by or that are caused to function by operating any of the elements illustrated in FIG. 3 in cooperation with instructions of the CPU 501 in accordance with a program read from the HDD 504 to the RAM 503.

The first communication unit 58 communicates with the terminal apparatus 30 and transmits and receives various types of information. For example, the first communication unit 58 receives settings regarding the sameness determination from the terminal apparatus 30, and sends the evaluation results. The first communication unit 58 may send the evaluation results by email. The control unit 51 controls the overall processing regarding the sameness determination. For example, the control unit 51 manages the flow of processing based on settings regarding the sameness determination received from the user and calls any of the necessary user functions from the printing application 52 to the first communication unit 58. As the control unit 51, control tools such as Jenkins are known. Further, the control unit 51 may be used in robotic process automation (RPA).

The printing application 52 is application software that runs on an OS installed in the information processing apparatus 50. The printing application 52 can open an evaluation file, call a printer driver 53, and start printing the evaluation file.

The printer driver 53 is software that runs on the OS installed in the information processing apparatus 50. The printer simulator 54 is software that runs on the OS installed in the information processing apparatus 50. The printer simulator 54 performs rendering that has been executed by an image forming apparatus. It should be noted that the printer simulator 54 may reside on the network N that the information processing apparatus 50 can access, besides residing in the information processing apparatus 50.

The evaluation unit 55 is an application module that is run on the information processing apparatus 50. The evaluation unit 55 compares two print-processing images of interest and evaluates whether the images can be deemed the same, for example. Further, the evaluation unit 55 generates difference information of the two print-processing images.

The screen information generation unit 56 generates, screen information of a screen to be displayed by the terminal apparatus 30 as a web server. In the present embodiment, mainly, screen information of a screen for receiving settings regarding a sameness determination from a user is generated. The settings regarding the sameness determination received by the screen information generation unit 56 from the user is used by the control unit 51 to control the overall processing regarding the sameness determination. The management unit 57 manages the settings regarding the sameness determination received by the screen information generation unit 56 from the user and the evaluation results of the two print-processing images. Also, the management unit 57 may be configured to manage the processing for sending the evaluation results of the images to the user by email or the processing for sending the evaluation results of the images to the user by a chat system.

Also, the storage unit 59 is the HDD 504, the RAM 503, or both, which are illustrated in FIG. 3. The print-processing images, the difference information, the evaluation results, and the like are stored in the storage unit 59.

### <<Terminal apparatus>>

The terminal apparatus 30 includes a second communication unit 71, a display control unit 72, and an operation reception unit 73. These units of the terminal apparatus 30 are functions or means that are implemented by or that are caused to function by operating any of the elements illustrated in FIG. 3 in cooperation with instructions of the CPU 501 in accordance with a program for the terminal apparatus 30 read from the HDD 504 to the RAM 503. It is assumed such a program for such a terminal apparatus 30 is a web browser, for example.

The second communication unit 71 receives or sends various types of information from or to the information processing apparatus 50. For example, various types of webpages are requested by HTTP communication and various types of operation content with respect to the webpages are sent to the information processing apparatus 50.

The display control unit 72 interprets the various types of screen information received from the information processing apparatus 50 and displays the screen information on the display 506. The display control unit 72 displays a screen for receiving settings regarding the sameness determination of image comparison conditions or the like and displays evaluation results of the images. The operation reception unit 73 receives various types of operations with respect to screens displayed by the display control unit 72.

### <Main effects>

As described above, the terminal apparatus 30 or the information processing system 100 of the present embodiment can be provided in multiple evaluation environments at a low cost because evaluation of the impact that printer driver differences, PDL module differences, or OS differences have on an image can be performed entirely by simulation, and thus without the use of an image forming apparatus.

Therefore, according to the present embodiment, an evaluation environment where multiple determination methods can perform evaluation of images can be provided at a low cost, and evaluation results obtained by the multiple determination methods performed in the evaluation environment can be compared.

### <<Other application examples>>

As described above, although embodiments are described with respect to exemplary modes for realizing the embodiments of the present disclosure, the embodiments of the present disclosure are not limited to these embodiments.

For example, in configuration example in FIG. 4, FIG. 15, and so on, respective functional blocks are divided in accordance with the main functions thereof for convenience of explanation of the processing by the terminal apparatus 30 or the information processing apparatus 50. The embodiments of the present disclosure are not limited by how the processing is divided into processing units or by the names of the units. The processing of the terminal apparatus 30 or the information processing apparatus 50 can also be divided into a larger number of processing units depending on the processing content. Such division may be made such that one processing unit includes a larger number of processes.

The group of apparatuses described in the present embodiment represents only one of multiple computing environments for implementing the embodiments described in this specification. In an embodiment, the terminal apparatus 30 or the information processing apparatus 50 includes, for example, multiple computing apparatuses, such as a server cluster. The multiple computing apparatuses are configured to communicate with each other via any type of communication link, including network or shared memory, to perform the processing disclosed in this specification. Likewise, the terminal apparatus 30 can include multiple computing apparatuses that are configured to communicate with each other.

Each of the functions of the embodiments described above can be implemented by one or more processing circuits. Here, the term "processing circuit" in this specification includes a processor programmed so as to execute the respective functions by software, such as a processor implemented by electronic circuits; or a device such as an Application Specific Integrated Circuit (ASIC), a Digital Signal Processor (DSP), a Field Programmable Gate Array (FPGA), or a conventional circuit module designed so as to execute the respective above-described functions.

The present application is based on and claims the benefits of priority of Japanese Priority Application No. 2020-143263 filed on August, 27, 2020.

### [Reference Signs List]

30 Terminal apparatus
31, 51 Control unit
32, 52 Printing application
33, 53 Printer driver
34, 54 Printer simulator
35, 55 Evaluation unit
36 Setting unit
37, 57 Management unit
38 Communication unit
39 Storage unit
40, 72 Display control unit
41, 73 Operation reception unit
50 Information processing apparatus
56 Screen information generation unit
58 First communication unit
71 Second communication unit
100 Information processing system
506 Display

## Claims

1. An information processing apparatus comprising:
a plurality of evaluation units (35) configured to evaluate an image generated by a printer simulator (34);
a setting unit (36) configured to receive settings of one or more evaluation units (35) of the plurality of evaluation units (35) from a user, the settings to be used for evaluation of the image;
a control unit (31) configured to cause the one or more evaluation units (35) for which the settings are received to evaluate the image; and
a display control unit (40) configured to display evaluation results obtained by the one or more evaluation units (35),
**characterised in**:
wherein with respect to the image and another image for which comparison and evaluation are to be performed by the one or more evaluation units (35), settings of an OS, a printer driver (33), and a printer simulator (34) that are to be used are received by the setting unit (36) on a per-image basis,
wherein the image generated by the printer simulator (34) and another image generated by another printer simulator (34) are compared and evaluated by the one or more evaluation units (35),
wherein the control unit (31) causes a virtual machine (61A, 61B) to execute the OS, the printer driver (33), and the printer simulator (34) set on a per-image basis with respect to the image and the another image that are to be compared and evaluated by the one or more evaluation units (35), and
wherein the display control unit (40) displays for each of the one or more evaluation units (35), the evaluation results including the image and another image for which comparison and evaluation are performed by the one or more evaluation units (35), a difference between the image and the another image, and evaluation results of the comparison.

2. The information processing apparatus according to claim 1, wherein the setting unit (36) changes, in accordance with contract details of the user, the one or more evaluation units (35) for which settings are received from the user.

3. The information processing apparatus according to claim 1 or 2, further comprising:
a communication unit (38) configured to send by email the evaluation results obtained by the one or more evaluation units (35).

4. A program comprising instructions which, when the program is executed by a computer, cause the computer to function as:
a plurality of evaluation units (35) configured to evaluate an image generated by a printer simulator (34);
a setting unit (36) configured to receive settings of one or more evaluation units (35) of the plurality of evaluation units (35) from a user, the settings to be used for evaluation of the image;
a control unit (31) configured to cause the one or more evaluation units (35) for which the settings are received to evaluate the image; and
a display control unit (40) configured to display evaluation results obtained by the one or more evaluation units (35),
**characterised in**:
wherein with respect to the image and another image for which comparison and evaluation are to be performed by the one or more evaluation units (35), settings of an OS, a printer driver (33), and a printer simulator (34) that are to be used are received by the setting unit (36) on a per-image basis,
wherein the image generated by the printer simulator (34) and another image generated by another printer simulator (34) are compared and evaluated by the one or more evaluation units (35),
wherein the control unit (31) causes a virtual machine (61A, 61B) to execute the OS, the printer driver (33), and the printer simulator (34) set on a per-image basis with respect to the image and the another image that are to be compared and evaluated by the one or more evaluation units (35), and
wherein the display control unit (40) displays for each of the one or more evaluation units (35), the evaluation results including the image and another image for which comparison and evaluation are performed by the one or more evaluation units (35), a difference between the image and the another image, and evaluation results of the comparison.

5. An information processing system comprising:
a terminal apparatus (30) and an information processing apparatus (50) configured to communicate with each other,
wherein the information processing apparatus (50) comprises
a plurality of evaluation units (55) configured to evaluate an image generated by a printer simulator (54);
a control unit (51) configured to cause one or more evaluation units (55) of the plurality of evaluation units (55) to evaluate the image in response to a request from the terminal apparatus (30);
a first communication unit (58) configured to transmit evaluation results obtained by the one or more evaluation units (55) to the terminal apparatus (30), and
wherein the terminal apparatus (30) comprises
an operation reception unit (73) configured to receive a selection operation of the one or more evaluation units (55) from a user, the settings to be used for evaluation of the image;
a second communication unit (71) configured to request the information processing apparatus (50) to evaluate the image by the one or more evaluation units (55) for which the selection operation is received, and to receive from the information processing apparatus (50) the evaluation results obtained by the one or more evaluation units (55); and
a display control unit (72) configured to display the evaluation results obtained by the one or more evaluation units (55),
wherein with respect to the image and another image for which comparison and evaluation are to be performed by the one or more evaluation units (55), settings of an OS, a printer driver (53), and a printer simulator (54) that are to be used are received by the setting unit (56) on a per-image basis,
wherein the image generated by the printer simulator (54) and another image generated by another printer simulator (54) are compared and evaluated by the one or more evaluation units (55),
wherein the control unit (51) causes a virtual machine (61A, 61B) to execute the OS, the printer driver (53), and the printer simulator (54) set on a per-image basis with respect to the image and the another image that are to be compared and evaluated by the one or more evaluation units (35), and
wherein the display control unit (72) displays for each of the one or more evaluation units (55), the evaluation results including the image and another image for which comparison and evaluation are performed by the one or more evaluation units (55), a difference between the image and the another image, and evaluation results of the comparison.

6. The information processing system according to claim 5, wherein the setting unit (56) changes, in accordance with contract details of the user, the one or more evaluation units (55) for which settings are received from the user.

7. The information processing system according to claim 5 or 6, wherein the first communication unit (58) sends by email the evaluations results obtained by the one or more evaluation units (55).

## Patentansprüche

1. Informationsverarbeitungseinrichtung, umfassend:
eine Vielzahl von Auswertungseinheiten (35), die so konfiguriert sind, dass sie ein von einem Druckersimulator (34) erzeugtes Bild auswerten;
eine Einstelleinheit (36), die so konfiguriert ist, dass sie Einstellungen einer oder mehrerer Auswertungseinheiten (35) aus der Vielzahl der Auswertungseinheiten (35) von einem Benutzer empfängt, wobei die Einstellungen zur Auswertung des Bildes verwendet werden sollen;
eine Steuereinheit (31), die so konfiguriert ist, dass sie die eine oder mehreren Auswertungseinheiten (35), für die die Einstellungen empfangen werden, veranlasst, das Bild auszuwerten; und
eine Anzeigesteuereinheit (40), die so konfiguriert ist, dass sie die von der einen oder den mehreren Auswertungseinheiten (35) erhaltenen Auswertungsergebnisse anzeigt,
**gekennzeichnet durch**:
wobei in Bezug auf das Bild und ein anderes Bild, deren Vergleich und Auswertung von der einen oder den mehreren Auswertungseinheiten (35) durchgeführt werden soll, die Einstellungen eines Betriebssystems, eines Druckertreibers (33) und eines Druckersimulators (34), die verwendet werden sollen, von der Einstelleinheit (36) bildweise empfangen werden,
wobei das vom Druckersimulator (34) erzeugte Bild und ein anderes Bild, das von einem anderen Druckersimulator (34) erzeugt wird, von der einen oder den mehreren Auswertungseinheiten (35) verglichen und ausgewertet werden,
wobei die Steuereinheit (31) eine virtuelle Maschine (61A, 61B) veranlasst, das Betriebssystem, den Druckertreiber (33) und den Druckersimulator (34) auszuführen, die bildweise in Bezug auf das Bild und das andere Bild eingestellt sind, die von der einen oder den mehreren Auswertungseinheiten (35) verglichen und ausgewertet werden sollen, und
wobei die Anzeigesteuereinheit (40) für jede der einen oder mehreren Auswertungseinheiten (35) die Auswertungsergebnisse einschließlich des Bildes und eines anderen Bildes, für die von der einen oder den mehreren Auswertungseinheiten (35) ein Vergleich und eine Auswertung durchgeführt werden, eine Differenz zwischen dem Bild und dem anderen Bild sowie die Auswertungsergebnisse des Vergleichs anzeigt.

2. Informationsverarbeitungseinrichtung nach Anspruch 1, wobei die Einstelleinheit (36) gemäß den Vertragsdetails des Benutzers die eine oder mehreren Auswertungseinheiten (35) ändert, für die Einstellungen vom Benutzer empfangen werden.

3. Informationsverarbeitungseinrichtung nach Anspruch 1 oder 2, weiter umfassend:
eine Kommunikationseinheit (38), die so konfiguriert ist, dass sie die von der einen oder den mehreren Auswertungseinheiten (35) erhaltenen Auswertungsergebnisse per E-Mail versendet.

4. Programm, das Anweisungen umfasst, die, wenn das Programm von einem Computer ausgeführt wird, den Computer dazu veranlassen, zu funktionieren als:
eine Vielzahl von Auswertungseinheiten (35), die so konfiguriert sind, dass sie ein von einem Druckersimulator (34) erzeugtes Bild auswerten;
eine Einstelleinheit (36), die so konfiguriert ist, dass sie Einstellungen einer oder mehrerer Auswertungseinheiten (35) aus der Vielzahl der Auswertungseinheiten (35) von einem Benutzer empfängt, wobei die Einstellungen zur Auswertung des Bildes verwendet werden sollen;
eine Steuereinheit (31), die so konfiguriert ist, dass sie die eine oder mehreren Auswertungseinheiten (35), für die die Einstellungen empfangen werden, veranlasst, das Bild auszuwerten; und
eine Anzeigesteuereinheit (40), die so konfiguriert ist, dass sie die von der einen oder den mehreren Auswertungseinheiten (35) erhaltenen Auswertungsergebnisse anzeigt,
**gekennzeichnet durch**:
wobei in Bezug auf das Bild und ein anderes Bild, deren Vergleich und Auswertung von der einen oder den mehreren Auswertungseinheiten (35) durchgeführt werden soll, die Einstellungen eines Betriebssystems, eines Druckertreibers (33) und eines Druckersimulators (34), die verwendet werden sollen, von der Einstelleinheit (36) bildweise empfangen werden,
wobei das vom Druckersimulator (34) erzeugte Bild und ein anderes Bild, das von einem anderen Druckersimulator (34) erzeugt wird, von der einen oder den mehreren Auswertungseinheiten (35) verglichen und ausgewertet werden,
wobei die Steuereinheit (31) eine virtuelle Maschine (61A, 61B) veranlasst, das Betriebssystem, den Druckertreiber (33) und den Druckersimulator (34) auszuführen, die bildweise in Bezug auf das Bild und das andere Bild eingestellt sind, die von der einen oder den mehreren Auswertungseinheiten (35) verglichen und ausgewertet werden sollen, und
wobei die Anzeigesteuereinheit (40) für jede der einen oder mehreren Auswertungseinheiten (35) die Auswertungsergebnisse einschließlich des Bildes und eines anderen Bildes, für die von der einen oder den mehreren Auswertungseinheiten (35) ein Vergleich und eine Auswertung durchgeführt werden, eine Differenz zwischen dem Bild und dem anderen Bild sowie die Auswertungsergebnisse des Vergleichs anzeigt.

5. Informationsverarbeitungssystem, umfassend:
eine Endgeräteinrichtung (30) und eine Informationsverarbeitungseinrichtung (50), die zur Kommunikation miteinander konfiguriert sind,
wobei die Informationsverarbeitungseinrichtung (50) umfasst
eine Vielzahl von Auswertungseinheiten (55), die so konfiguriert sind, dass sie ein von einem Druckersimulator (54) erzeugtes Bild auswerten;
eine Steuereinheit (51), die so konfiguriert ist, dass sie eine oder mehrere Auswertungseinheiten (55) der Vielzahl von Auswertungseinheiten (55) veranlasst, das Bild in Reaktion auf eine Anforderung der Endgeräteinrichtung (30) auszuwerten;
eine erste Kommunikationseinheit (58), die so konfiguriert ist, dass sie die von der einen oder den mehreren Auswertungseinheiten (55) erhaltenen Auswertungsergebnisse an die Endgeräteinrichtung (30) übermittelt, und
wobei die Endgeräteinrichtung (30) umfasst
eine Operationsempfangseinheit (73), die so konfiguriert ist, dass sie von einem Benutzer eine Auswahloperation der einen oder mehreren Auswertungseinheiten (55) empfängt, wobei die Einstellungen für die Auswertung des Bildes verwendet werden sollen;
eine zweite Kommunikationseinheit (71), die so konfiguriert ist, dass sie die Informationsverarbeitungseinrichtung (50) auffordert, das Bild durch die eine oder mehreren Auswertungseinheiten (55), für die die Auswahloperation empfangen wird, auszuwerten, und von der Informationsverarbeitungseinrichtung (50) die von der einen oder den mehreren Auswertungseinheiten (55) erhaltenen Auswertungsergebnisse empfängt; und
eine Anzeigesteuereinheit (72), die so konfiguriert ist, dass sie die von der einen oder den mehreren Auswertungseinheiten (55) erhaltenen Auswertungsergebnisse anzeigt,
wobei in Bezug auf das Bild und ein anderes Bild, deren Vergleich und Auswertung von der einen oder den mehreren Auswertungseinheiten (55) durchgeführt werden soll, die Einstellungen eines Betriebssystems, eines Druckertreibers (53) und eines Druckersimulators (54), die verwendet werden sollen, von der Einstelleinheit (56) bildweise empfangen werden,
wobei das vom Druckersimulator (54) erzeugte Bild und ein anderes Bild, das von einem anderen Druckersimulator (54) erzeugt wird, von der einen oder den mehreren Auswertungseinheiten (55) verglichen und ausgewertet werden,
wobei die Steuereinheit (51) eine virtuelle Maschine (61A, 61B) veranlasst, das Betriebssystem, den Druckertreiber (53) und den Druckersimulator (54) auszuführen, die bildweise in Bezug auf das Bild und das andere Bild eingestellt sind, die von der einen oder den mehreren Auswertungseinheiten (35) verglichen und ausgewertet werden sollen, und
wobei die Anzeigesteuereinheit (72) für jede der einen oder mehreren Auswertungseinheiten (55) die Auswertungsergebnisse einschließlich des Bildes und eines anderen Bildes, für die von der einen oder den mehreren Auswertungseinheiten (55) ein Vergleich und eine Auswertung durchgeführt werden, eine Differenz zwischen dem Bild und dem anderen Bild sowie die Auswertungsergebnisse des Vergleichs anzeigt.

6. Informationsverarbeitungssystem nach Anspruch 5, wobei die Einstelleinheit (56) gemäß den Vertragsdetails des Benutzers die eine oder mehreren Auswertungseinheiten (55) ändert, für die Einstellungen vom Benutzer empfangen werden.

7. Informationsverarbeitungssystem nach Anspruch 5 oder 6, wobei die erste Kommunikationseinheit (58) die von der einen oder den mehreren Auswertungseinheiten (55) erhaltenen Auswertungsergebnisse per E-Mail versendet.

## Revendications

1. Appareil de traitement d'informations comprenant :
une pluralité d'unités d'évaluation (35) configurées pour évaluer une image générée par un simulateur d'imprimante (34) ;
une unité de réglage (36) configurée pour recevoir les réglages d'une ou plusieurs unités d'évaluation (35) de la pluralité d'unités d'évaluation (35) d'un utilisateur, les réglages étant à utiliser pour l'évaluation de l'image ;
une unité de commande (31) configurée pour amener les une ou plusieurs unités d'évaluation (35), pour lesquelles les réglages sont reçus, à évaluer l'image ; et
une unité de commande d'affichage (40) configurée pour afficher les résultats d'évaluation obtenus par les une ou plusieurs unités d'évaluation (35),
**caractérisé en ce que** :
dans lequel en ce qui concerne l'image et une autre image, pour lesquelles la comparaison et l'évaluation doivent être effectuées par les une ou plusieurs unités d'évaluation (35), les réglages d'un système d'exploitation, d'un pilote d'imprimante (33) et d'un simulateur d'imprimante (34) qui doivent être utilisés sont reçus par l'unité de réglage (36) sur une base image par image,
dans lequel l'image générée par le simulateur d'imprimante (34) et une autre image générée par un autre simulateur d'imprimante (34) sont comparées et évaluées par les une ou plusieurs unités d'évaluation (35),
dans lequel l'unité de commande (31) amène une machine virtuelle (61A, 61B) à exécuter le système d'exploitation, le pilote d'imprimante (33) et le simulateur d'imprimante (34) configurés sur une base image par image par rapport à l'image et à l'autre image qui doivent être comparées et évaluées par les une ou plusieurs unités d'évaluation (35), et
dans lequel l'unité de commande d'affichage (40) affiche pour chacune des une ou plusieurs unités d'évaluation (35), les résultats d'évaluation, y compris l'image et l'autre image pour lesquelles la comparaison et l'évaluation sont effectuées par les une ou plusieurs unités d'évaluation (35), une différence entre l'image et l'autre image, et les résultats d'évaluation de la comparaison.

2. Appareil de traitement d'informations selon la revendication 1, dans lequel l'unité de réglage (36) modifie, conformément aux détails du contrat de l'utilisateur, les une ou plusieurs unités d'évaluation (35) pour lesquelles des réglages sont reçus de l'utilisateur.

3. Appareil de traitement d'informations selon la revendication 1 ou 2, comprenant en outre :
une unité de communication (38) configurée pour envoyer par e-mail les résultats d'évaluation obtenus par les une ou plusieurs unités d'évaluation (35).

4. Programme comprenant des instructions qui, lorsqu'il est exécuté par un ordinateur, font en sorte que ce dernier fonctionne comme :
une pluralité d'unités d'évaluation (35) configurées pour évaluer une image générée par un simulateur d'imprimante (34) ;
une unité de réglage (36) configurée pour recevoir les réglages des une ou plusieurs unités d'évaluation (35) de la pluralité d'unités d'évaluation (35) d'un utilisateur, les réglages étant à utiliser pour l'évaluation de l'image ;
une unité de commande (31) configurée pour amener les une ou plusieurs unités d'évaluation (35), pour lesquelles les réglages sont reçus, à évaluer l'image ; et
une unité de commande d'affichage (40) configurée pour afficher les résultats d'évaluation obtenus par les une ou plusieurs unités d'évaluation (35),
**caractérisé en ce que** :
dans lequel en ce qui concerne l'image et une autre image pour lesquelles la comparaison et l'évaluation doivent être effectuées par les une ou plusieurs unités d'évaluation (35), les réglages d'un système d'exploitation, d'un pilote d'imprimante (33) et d'un simulateur d'imprimante (34) qui doivent être utilisés sont reçus par l'unité de réglage (36) sur une base image par image,
dans lequel l'image générée par le simulateur d'imprimante (34) et l'autre image générée par un autre simulateur d'imprimante (34) sont comparées et évaluées par les une ou plusieurs unités d'évaluation (35),
dans lequel l'unité de commande (31) amène une machine virtuelle (61A, 61B) à exécuter le système d'exploitation, le pilote d'imprimante (33) et le simulateur d'imprimante (34) configurés sur une base image par image par rapport à l'image et à l'autre image qui doivent être comparées et évaluées par les une ou plusieurs unités d'évaluation (35), et
dans lequel l'unité de commande d'affichage (40) affiche pour chacune des une ou plusieurs unités d'évaluation (35), les résultats de l'évaluation, y compris l'image et l'autre image pour lesquelles la comparaison et l'évaluation sont effectuées par les une ou plusieurs unités d'évaluation (35), une différence entre l'image et l'autre image, et les résultats d'évaluation de la comparaison.

5. Système de traitement d'informations comprenant :
un appareil terminal (30) et un appareil de traitement d'informations (50) configurés pour communiquer entre eux,
dans lequel l'appareil de traitement d'informations (50) comprend
une pluralité d'unités d'évaluation (55) configurées pour évaluer une image générée par un simulateur d'imprimante (54) ;
une unité de commande (51) configurée pour amener une ou plusieurs unités d'évaluation (55) de la pluralité d'unités d'évaluation (55) à évaluer l'image en réponse à une demande de l'appareil terminal (30) ;
une première unité de communication (58) configurée pour transmettre les résultats d'évaluation obtenus par les une ou plusieurs unités d'évaluation (55) à l'appareil terminal (30), et
dans lequel l'appareil terminal (30) comprend
une unité de réception d'opération (73) configurée pour recevoir une opération de sélection des une ou plusieurs unités d'évaluation (55) d'un utilisateur, les réglages étant à utiliser pour l'évaluation de l'image ;
une seconde unité de communication (71) configurée pour demander à l'appareil de traitement d'informations (50) d'évaluer l'image par les une ou plusieurs unités d'évaluation (55) pour lesquelles l'opération de sélection est reçue, et pour recevoir de l'appareil de traitement d'informations (50) les résultats d'évaluation obtenus par les une ou plusieurs unités d'évaluation (55) ; et
une unité de commande d'affichage (72) configurée pour afficher les résultats d'évaluation obtenus par les une ou plusieurs unités d'évaluation (55),
dans lequel en ce qui concerne l'image et une autre image pour lesquelles la comparaison et l'évaluation doivent être effectuées par les une ou plusieurs unités d'évaluation (55), les réglages d'un système d'exploitation, d'un pilote d'imprimante (53) et d'un simulateur d'imprimante (54) qui doivent être utilisés sont reçus par l'unité de réglage (56) sur une base image par image,
dans lequel l'image générée par le simulateur d'imprimante (54) et l'autre image générée par un autre simulateur d'imprimante (54) sont comparées et évaluées par les une ou plusieurs unités d'évaluation (55),
dans lequel l'unité de commande (51) amène une machine virtuelle (61A, 61B) à exécuter le système d'exploitation, le pilote d'imprimante (53) et le simulateur d'imprimante (54) configurés sur une base image par image par rapport à l'image et l'autre image qui doivent être comparées et évaluées par les une ou plusieurs unités d'évaluation (35), et
dans lequel l'unité de commande d'affichage (72) affiche pour chacune des une ou plusieurs unités d'évaluation (55), les résultats d'évaluation, y compris l'image et l'autre image pour lesquelles la comparaison et l'évaluation sont effectuées par les une ou plusieurs unités d'évaluation (55), une différence entre l'image et l'autre image, et les résultats d'évaluation de la comparaison.

6. Système de traitement d'informations selon la revendication 5, dans lequel l'unité de réglage (56) modifie, conformément aux détails du contrat de l'utilisateur, les une ou plusieurs unités d'évaluation (55) pour lesquelles des réglages sont reçus de l'utilisateur.

7. Système de traitement d'informations selon la revendication 5 ou 6, dans lequel la première unité de communication (58) envoie par e-mail les résultats d'évaluation obtenus par les une ou plusieurs unités d'évaluation (55).
